# EUROPEAN PATENT SPECIFICATION

(11) **EP 0 382 996 B1**
(45) Date of publication and mention of the grant of the patent: **12.01.1994**
(21) Application number: 89810118.3
(22) Date of filing: 15.02.1989
(51) Int. Cl.: H04H 9/00, H04N 5/76

(54) **Method and system for ascertaining the consumption habits of a test population**
Methode und System zur Erfassung der Verbrauchsgewohnheiten einer Testbevölkerung
Méthode et système pour établir la consommation habituelle d'un échantillon testé de population

(43) Date of publication of application: 22.08.1990
(73) Proprietor: SRG SCHWEIZERISCHE RADIO- UND FERNSEHGESELLSCHAFT, CH-3000 Bern 15 (CH)
(72) Inventor: Steinmann, Mathias, CH-3510 Konolfingen (CH)
(74) Representative: Steiner, Martin

(56) References cited:
- EP-A- 0 275 328
- GB-A- 2 180 111
- US-A- 4 622 583
- US-A- 4 633 302
- "VIDEORECORDER-TECHNIK, Grundlagen, Schaltungstechnik und Service", Friedrich Manz, Vogel Buchverlag Würzburg, 4. Auflage, 1987, ISBN 3 8023-0621-X

## Description

### BACKGROUND OF THE INVENTION

The present invention relates to a method and a system for ascertaining the consumption habits, more particularly the television consumption habits of a test population, whereby data regarding the habits, more particularly through determination of the television channel, respectively the program switched on and/or through interrogation of the population, is automatically memorized in locally arranged apparatuses and the memorized data is preferably transmitted by telephone to a central computer for evaluation. Systems as described above are on the market from different sources and they are used in different countries, more particularly for investigating the television consumption habits.

A first decisive object of such methods, respectively systems relates to the reliable automatic determination of the television channel, respectively the program switched on. The published application DE-OS 33 42 949 relates to a method of determination of the channel selection in a television receiver (TV-receiver). This known method presupposes that to each TV-receiver there is associated a locally arranged apparatus which has to determine from the tuning voltage which channel is switched on, respectively which channel is received. This known procedure presupposes an individual adaption of each single locally arranged TV-receiver and this not only at the time of the first installation of the apparatus but generally also at each modification of the transmitted frequencies and starting of new transmitters.

### SUMMARY OF THE INVENTION

It is an object of the present invention to simplify the acquisition of data, more particularly the determination of the television channel, respectively the television program. Such a simplification may have the effect that the scope of seizable data can generally be enlarged. According to claim 1, the solution of this problem is a method which is characterized in that the data, more particularly the data of a television channel is acquired locally in a form which can be decoded directly by the central computer without preliminary local decoding, whereby preferably the carrier frequency is determined and whereby besides data relating to television channels, respectively television programs, preferably also data relating to video recording and reproducing, data relating to interactive modes between the local apparatus, respectively the central computer and test persons, data relating to teletext or video reception, data relating to computer games and data relating to other consumption habits is acquired and whereby preferably local data of accessory apparatuses is transmitted with a high frequency carrier through the supply mains to a principal apparatus connected to the central computer.

As already mentioned, the invention relates also to a system for carrying out the method according to the invention which system in accordance with claim 10 is characterized by switching means which are capable to effect the local acquisition of data, more particularly of data of a television channel, in a form which may be decoded directly by the central computer without preliminary local decoding, whereby preferably the carrier frequency is determined and whereby besides switching means for the determination of data regarding television channels, respectively programs, preferably also switching means are provided for the determination of data relating to interactive modes between the local apparatus, respectively the central computer and test persons, data relating to the reception of teletext or the reception of video, data relating to computer games and data relating to other consumption habits and whereby preferably switching means are provided for transmitting local data of accessory apparatuses with high frequency carrier through the supply mains to a principal apparatus connected to the central computer. Other objects of the invention and corresponding solutions are to be found in the dependent claims.

### BRIEF DESCRIPTION OF THE DRAWINGS

The invention will be described further by way of example and by reference to the accompanying drawings in which:
- Figure 1: is a schematic illustration of the apparatuses installed in a household,
- Figure 2: is a block diagram of an adapter for the determination of channels,
- Figure 3: is a circuit with a video recorder,
- Figure 4: is a pulse diagram illustrating the operation of the circuit of Figure 3.
- Figure 5: is a block diagram of a variant of the video module for integration of data in the video signal, and
- Figure 6: is a pulse diagram illustrating the conditions in which the integration of Figure 5 takes place.

### DETAILED DESCRIPTION OF THE INVENTION

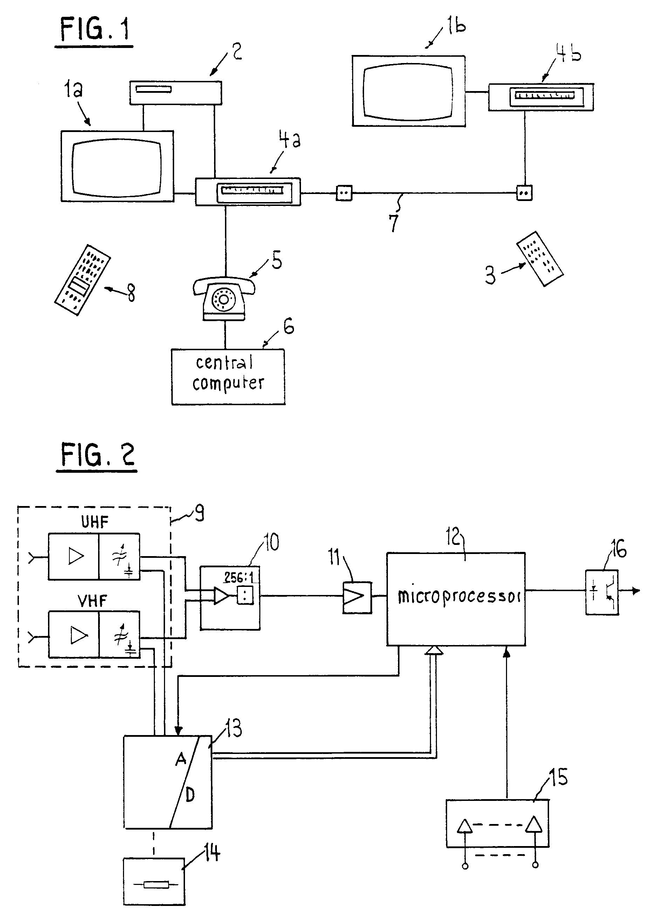

Figure 1 shows the apparatuses present in a household, more particularly two TV-sets 1a and 1b which are installed in different rooms. A video recorder (VCR) 2 is connected to the TV-receiver 1a. To each of the two TV-receivers 1a and 1b is associated a remote control manipulator 3, only one of which being illustrated in Fig.1. A monitor 4a which will be called TCG (telecontrol apparatus) hereinafter is connected to the TV-receiver 1a and the VCR 2, the TCG 4a being also connected to a central computer 6 through the home telephone 5. A TCG 4b is also connected to the TV-receiver 1b, this TCG being also connected by high frequency signals through the supply mains 7 to the TCG 4a. The TCG 4b is different from the TCG 4a in that it does not comprise a module for connection to the telephone network. However, both TCG's comprise transmitting and receiving circuits for digital transmission of data from the TCG 4b in the TCG 4a, the release of the transmission coming from TCG 4a. Finally, a remote control manipulator 8 is provided for each TCG 4a, 4b. Both TCG's 4a and 4b are provided with an electroluminescent display which is capable to display any cipherns, texts and symbols.

As described above, data relating to the use of the TV-receivers 1a and 1b as well as of the VCR 2, more particularly data relating to the emission of television which is received at a determined time, to the emission reproduced from the VCR or to personal recordings and similar is memorized in the TCG's 4a and 4b. This data is periodically recalled by the central computer 6 from the TCG 4a in which data from TCG 4b is also memorized. The recalled data is then processed with data of many other households and centrally memorized.

A first central task of the illustrated system consists to determine correctly and in a simple manner the specific working condition, more particularly the specific television channel, resp. the television program switched on. As mentioned above, it is of particular interest to achieve this determination largely independently from individual matching operations at the place of installation in the households. The determination must also be largely independent from individual characteristics of TV-receivers of different sorts. To this end and in accordance with the present invention, one determines the carrier frequency of the TV-channel switched on, this frequency being fixedly allocated to this channel so that it characterizes this particular channel in a reliable fashion. However, it is also possible to take the digitally converted tuning voltage which drives the capacity dependent varicap diode as a characteristic and by means of interpolation, resp. by systematic interrogation, to identify the channel in the central computer and also to classify correctly new or modified channel frequencies without any intervention in the households. This permits to avoid the checking and adaption of the TCG's 4a and 4b in the households.

Figure 2 shows an adapter for the determination of the channel. The reference 9 designates the tuning circuit (tuner) for UHF and VHF. The input frequency is delivered to a microprocessor 12 through a broadband amplifier and frequency divider 10 as well as an interface 11. It is also possible, as an alternative, to deliver the tuning analog voltage to an analog interface 13 comprising a digital-analog converter having an associated calibration circuit 14. Further, a digital interface 15 is provided by means of which tuning informations from the TV-receiver can be transmitted to the processor 12. The circuit of Figure 2 permits also at will to convert in digital form different sorts of specific informations being finally delivered to the TCG's 4a, resp. 4b through a master slave interface 16 (optocoupler). However, one chooses preferably the carrier frequency of the received channel because this leads to the smallest probability of false interpolations. In the following are given some particular specifications of the circuit of Figure 2.

The digital adapter can be used practically with all apparatuses in the field of entertainment electronics available on the market in which the received information in all frequency bands is recovered in accordance with the heterodyne principle. More particularly, it may be used in TV-receivers, video recorders and radio receivers. It has the function to selectively determine the broadcast channels which are converted in images and sounds by the heterodyne principle in the above mentioned apparatuses. The adapter which is integrated in the TCG system gathers the data which is necessary for the recognition of the status condition for the public opinion survey. The digital adapter has basically three different ways of determination of the necessary data for ascertaining the consumption habits:
a) Measurement of the oscillator frequency in the range of 30 MHz to 1 GHz. The measured frequency is directly allocated to a given channel in accordance with the allocation B or G of the CCIR Standard.
b) Analog determination: The adapter may also determine analog measured values or logic conditions which come from the receiving part or the processing part of the apparatuses and assigne them to a determined output value.
c) Sequential data determination: The adapter is capable of determining and analysing sequential signals on narrow bus systems in the digital part of the apparatuses. Bit sequence frequencies up to 40 KBit/s are possible.

The adapter comprises a high speed microprocessor system. At its periphery are provided three converter systems for analog-digital signal processing:
a) Measurement of the oscillator frequency: At immediate proximity of the tuning unit is installed the high sensitive HF-broadband amplifier 10 which is coupled with the oscillator portion of the tuner 9 by means of an exposed probe. The oscillator signal is received through HF-transparent places in the tuner housing, amplified and delivered to the processor after analog-digital conversion. The processor acts as a frequency measuring device and it can recognize the selected channel in the receiver. The execution of the HF-amplifier permits to recognize the VHF and UHV frequencies in the tuner.
b) Analog input system: The analog inputs are delivered to the processor through an analog -digital converter (AD-converter) and a multiplex system. An input is specially provided for the determination of the tuning voltage of the varicap diode. Six inputs serve to the determination of the threshold values of status signals.
c) Digital determination: Different inputs serve to direct parallel or sequential data recognition. In dependence on the software utilized, synchronous or asynchronous data streams may be determined and analysed. The input functions of the adapter are filtered digitally and the data obtained is formatted to be system adapted and the programs of utilization of the adapter may be individually prepared or partially recalled from read-only memories.

Whichever the manner of channel determination is effected, the central computer can decode directly the digital information received. All specific data relating to the channels is memorized in the computer and the channel received is identified by comparison of its characteristic data with the data memorized. If an information is missing in the memory, it is possible to interrogate the viewer from the central computer. In this case, the question e.g. "are you looking at channel X ?" appears on the TCG and it is assumed that the channel corresponds either to a new one or to an already existing one the frequency of which has been changed. The answer "yes" confirms the assumption and the new data can be memorized and assigned to the new or modified (frequency) channel. There exists in this respect even the possibility to detect false indications made by the viewer, such indications leading to particular conclusions.

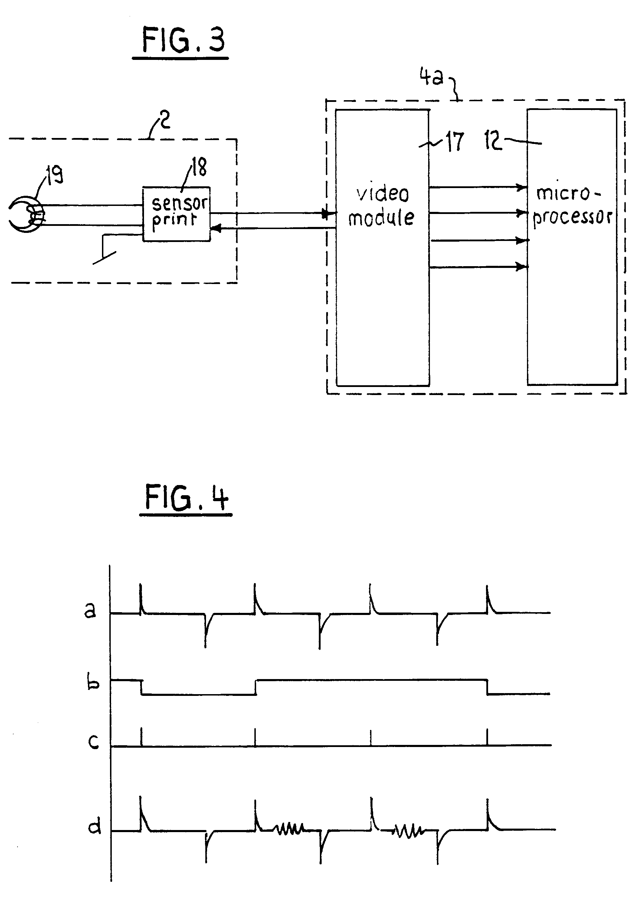

As mentioned, informations about the use of the video recorder (VCR) are desirable to be obtained. Figure 3 shows a block diagram of the essential circuits for the determination of data relating to the use of the VCR. A video module 17 is comprised in the TCG 4a, this module being connected to the processor 12 through a bus system. The video module is also connected in the VCR to a sensor print 18 which is itself connected to the CTL-head 19 (CTL is the track on the tape according to American National Standard) of the VCR. The particular specifications are as follows:
The video module 17, as a subsystem of the TCG 4a, makes possible data recording and reproducing. It is limited to the normalized systems VHS and Betamax. At the time of recording the data is magnetically registered on the video tape and it can be read again at the time of reproducing without any interference for the user. The system has no qualitative influence on the recording of image and sound.

All video recorder of the types VHS and Betamax may be equipped for data recognition with the video module 17. The CTL-head synchronization has been choosen as a system constant possibility of modulation. The mounting of the video module is very simple because it necessitates only a 2-wire connection to the audio head. In addition, an adapter is to be mounted for the channel voltage, on-off and determination of the play condition. The CTL track comprises the synchronization for the rotating video head. Needle pulses synchronous with the beginning of the image are recorded on the track, these pulses permitting to stabilize the image at the time of reproducing. The video module permits to record data between the synchronization pulses. The transmission of data is effected sequentially at 1 bit per image. The maximum data transmission rate is therefore 30 bits/sec. The video module comprises a microprocessor which takes the data sequentially from the TCG 4a and records it sequentially on the tape.

The sensor print 18 is a bidirectional analog amplifier. The inputs are connected directly to two taps of the recording and reproducing CTL-head. The input signal is delivered through a magnetic coupling device to the amplifier without DC component. Input and output signals are separated from each other by a circulator. The differences in the levels of the input signals permit the system to automatically recognize the recording and reproducing modes of the VCR. Further, dynamic of the system is reduced to a minimum value by means of a keyed regulation and filter components.

The video module 17 comprises a microprocessor and it processes the signals read according with determined filtering methods for gathering data. It synchronizes at the time of recording in the VCR to the vertical synchronization pulses and it modulates sequentially a data stream in the intervals between the vertical blanking pulses and it can reproduce with accuracy and reliability the registered data. Distorsions in the duration of the period of the vertical blanking pulses are automatically corrected by the processor. Also normal and slow speeds of the tape are automatically determined and controlled by the system.

The CTL recording track is used for synchronizing the driving system to the image frequency (beginning of the image). This signal is delivered to the recording head through a differentiator. It becomes in this way a system specific norm. Figure 4 shows:
a) the differentiated signal at the time of recording. During reproducing, one obtains the same signal but at a 60 dB smaller level;
b) the digital data stream at the processor interface 11;
c) the data synchroniziong pulses determined by the digital processor filtering, and
d) a data modulated CTL-signal (the burst after the positive peaks represents a logic 1).

It is also possible to determine data relating to the sort of the emission and to the time of its recording and reproducing, to memorize this data and to transmit it to the central computer. It is also possible to determine if recorded television emissions, purchased video tapes or self made video records take place. This determination is made in accordance with the above described dialogue method. If the computer determines that data related to a video reproduction does not correspond to a television channel, resp. program, an interrogation by means of the display of the TCG about the sort of video record which is viewed may take place.

For the media and market research, it is desirable to determine in addition if teletext is viewed and which pages of teletext are viewed. One has also to determine when and which page of teletext is selected. However, due to the fact that many teletext decoders of the TV-apparatuses offer the possibility to lay down pages of the teletext in a memory without to display them on the TV-screen, it was necessary to develop a special adapter. This adapter decodes the code (page number) from the RGB (red, green, blue) color signal or the blanking signal shortly before the CRT (cathode ray tube). This permits to recognize the code (page number) of the page of the teletext which is effectively displayed.

The image content of a page of teletext is read in in a digital memory with a sample frequency of 6 MHz. The initial instruction is given by the processor 12 after this processor has determined through a teletext status input that teletext is switched on. The 6 MHz clock frequency is taken from the teletext decoder in the TV-apparatus so that the samples which are read in correspond to the points of the image that are used by the teletext decoder for the display of signs. The start for the read in cycle is associated with the image and line synchronization pulses in order to ensure that a full image is read in in correct synchronism. The image is memorized line by line. In order for each sample to receive an address in the memory, the clock frequency of 6 MHz drives an address counter which at the time of read in takes over the RAM-addressing. The clock frequency is suppressed during the duration of the lines synchronization pulses in order not to occupy unnecessary place in the memory. An additional enable input at the clock connection permits to start and to stop the clock at any place on the lines of the image. This permits to read in only determined portions of an image.

If an image is memorized, the processor 12 can select each individual point and after calculation of the addresses it can sum up all related points again in form of a matrix according to the teletext norm. This renders possible the recognition of the page number on the heading line of the teletext or other optional page marks and to transfer them to the TCG for evaluation. It is also possible to decode any bit sequence of a line.

As mentioned, it is possible and desirable to further determine data relating to the consumption habits and to transfer it to the central computer. To day, a high percentage of products are provided with indications in the UPC (Universal Product Code) code so that it is possible to give to the consumer an UPC scanner with which he can read the UPC code on the envelope or the casing of the purchased good and transfer this code in the TCG through an appropriated adapter. Further indications may be given by means of the remote control manipulator 8. Correspondingly, data may also be determined at selling points which permits a research about the consumer comportment.

The auxiliary device for reading the UPC code is preferably designed for being fed by the supply mains and for transmitting the data determined by high frequency through the supply mains to the TCG as previously described. This UPC scanner for reading data may be installed at any place in the household, e.g. in the kitchen for determination of data. It may also be provided with a key board for entry of not automatically readable data. Other data may also be entered either by scanning of tables with UPC code or entered manually, e.g. data over newspapers and periodics reading, radio hearing and other habits.

Different modificatiobns are possibles, whereby systems in the most different steps of completion may be used. It is for example possible to use more than two secondary TCG's 4b. With respect to the present invention it is to be seen that in all cases data has to be determined from broadcast channels, resp. emissions while all other data acquisition required about the use of the video recorder or about informations from the teletext or from the central decoding of data, as the case may be by means of dialogue, are to be independently protected.

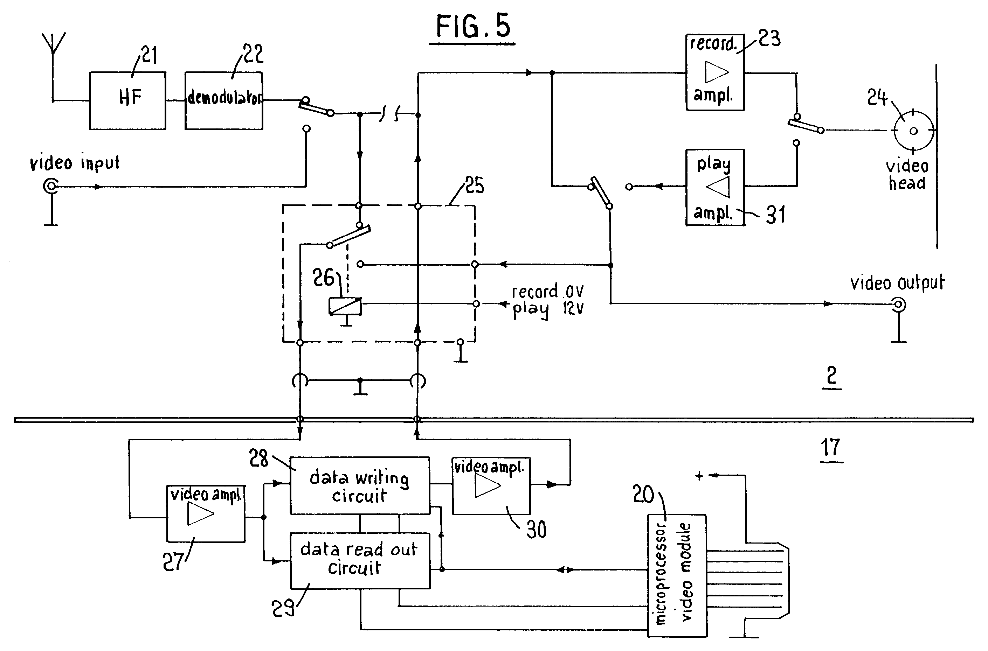

It has been shown above that all video recorders of the types VHS and Betamax may be equipped for data identification with the video module 17. Figure 5 shows a block diagram of a variant of the video module for integrating data not as previously in the CTL track but in the video signal before its recording and for recording this signal on the video tape in the image track.

The data to be written in the video signal is the following:

| | |
|---|---|
| channel number | 1 byte |
| local time | 3 byte |
| date | 3 byte |
| check sum | 1 byte |
| total | 8 byte per frame |

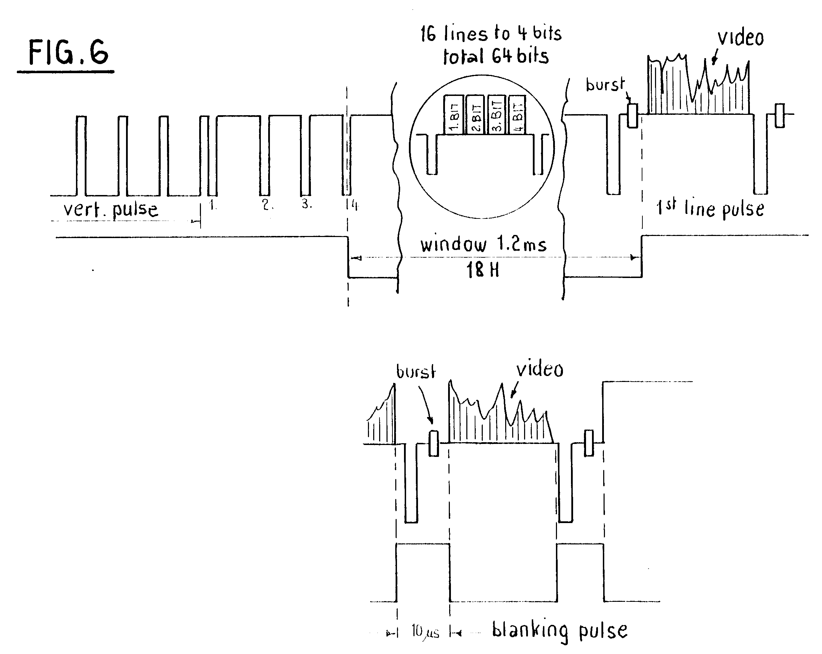

One sees that the information to be introduced comprises 8(byte) x 8 bits = 64 bits. This information is to be written in the first 16 lines of each frame of the video signal which means that each line receives 4 bits. These conditions are illustrated in Figure 6.

The first lines of each frame of a video signal received from a TV-transmitter do not comprise an image content but data relating to teletext, vertical pulse synchronization (VPS) and special transmitter identifiction signals. In the case of a recording of this video signal on a video tape, this data from the transmitter is not considered. The VPS data is only necessary for the precise starting and stopping of a video recording. Instead of the data comprised in the video signal from the transmitter and relating to the teletext, VPS and transmitter identification, the video module of the present invention permits to introduce in the video signal other data like transmitting channel number, time and date of the transmission, without to disturb the normal working of the video recorder or of the TV-installation.

The precise timing relations for introducing data in the video signal is controlled by a microprocessor 20 of the video module 17 in such a way that the normal operation of the video recorder 2 is not disturbed. Also, the content of the image is not affected. Figure 5 shows that the video signal to be recorded is recovered from the TV-signal after this TV-signal which is received on the antenna has been amplified in the HF portion 21 of the TV-receiver and demodulated in the demodulator 22. Normally, if the video signal had not to be provided with data before its recording, this video signal would be amplified in a recording amplifier 23 and delivered to the video head 24 for recording. However, in the present case, the direct connection between the demodulator 22 and the recording amplifier 23 is interrupted and the demodulated video signal is delivered to a video switching module 25 of the video recorder 2. The video switching module comprises essentially a relay 26 with a SPDT contact arrangement. The video signal in which data is to be written is delivered by the video switching module 25 to a video amplifier 27 which in its turn delivers the video signal further to a data writing circuit 28 in which the above mentioned data is written on the first 16 lines of each frame and at the same time to a data reading circuit 29 in which the data recorded on the video tape is recovered. The output of the circuit 28 is delivered through a video amplifier 30 to the video switching module 25 which is connected to the recording amplifier 23. The data to be written in the video signal is provided to the circuit 28 by the microprocessor video module 20 which is connected to the TCG print.

If the VCR-adapter and the TCG determine that the video recorder 2 has been switched on recording, the video module 17 receives an enable signal and the video module synchronizes itself on the vertical and horizontal synchronization pulses of the video signal to be recorded. The video signal is also blanked out by means of blanking synchron pulses and clamping pulses in such a way that these values are not modified by the video module. The data on the first 16 lines of each frame for VPS, teletext, etc. is overwritten by the above mentioned data (channel number, time, date).

If the video recorder is switched on reproduction, the video signal from the head 24 is delivered to the video switching module through the play-amplifier 31 and from the video switching module through the video amplifier 27 to the reading circuit 29. The video module is synchronized to the video signal so that the data written may be read each time the cassette is reproduced. The data from the circuit 29 is delivered through the microprocessor 20 to the TCG-apparatus for being displayed.

## Claims

1. A method for obtaining information relating to the use of video equipment by a test population, the video equipment comprising video recorder means (2) for reproducing and recording video programs and the method comprising the steps of:
- recording, during video program recording, data characterizing the recorded program on a synchronization track of a video recording medium, including the steps of analyzing synchronization pulses occurring on said synchronization track, and recording said characterizing data between said synchronization pulses;
- detecting, during video program reproduction, said recorded characterizing data to identify characteristics of said video programs;
- storing said detected data;
- transmitting said stored data to a central computer to obtain information relating to the use of video equipment by a test environment;
characterized in that said characterizing data are recorded at a first level and reproduced at a second level, and that the differences in the levels of these signals are used to distinguish between recording and video reproduction mode.

2. A method according to claim 1, characterized in that in the absence of characterizing data related to the memorized program the kind of video recording is determined by a dialogue between said central computer and a viewer.

3. A method according to claim 1, characterized in that the characterizing data is recorded at a rate of one bit per image of the video signal, each image corresponding to two synchronization pulses recorded on the synchronization track and the data being interspersed between the synchronization pulses.

4. A method according to claim 1, characterized in that the characterizing data is recorded on the synchronization track at a level smaller than that of the synchronization pulses.

5. An apparatus for implementing the method according to any one of claims 1 to 4 comprising a video recorder which records synchronization pulses on a control track by means of a control head (19), characterized in that a bidirectional amplifier is connected to the control head (19) by a two wire line, the bidirectional amplifier (18) additionally having an input and an output which both are connected to an output resp. an input of a video module (17), the video module (17) being capable of discerning between recording mode and play mode of the video recorder by analyzing the signals at its input and of generating characterizing data signal at its output during recording mode, the characterizing data signals being in timely connection with the synchronization pulses so that they are only generated during the pauses between each two synchronization pulses.

6. An apparatus for implementing the method according to claim 5, characterized in that the characterizing data signals sent to the synchronization head (19) and the characterizing data signals read from the synchronization head (19) by the video module (17) are separated from each other by a circulator.

7. A method for determining the television and video consumption habits of a test population in an environment comprising:
- a television receiver (1a);
- a video recorder (2) connected to said television receiver, said video recorder comprising
-- a demodulator (22) for demodulating received television signals;
-- a video input;
whereby
- a telecontrol apparatus (4a) connected to said video-recorder (2) includes a video module (17) which comprises a data writing (28) and a data read out (29) means,
- and whereby the video-recorder (2) further comprises
-- switch means (26) for changing over from a record mode to a play mode, said switch means including a first switch selectively connectable to said video input, said first switch being selectively connectable to an input of said data writing and data read out means for transmitting video signals thereto;
the method comprising the following steps:
- the data generated by said data writing means (28) is delivered to a recording amplifier (23) of the video recorder,
- the signal output from a play amplifier (31) in said video recorder is delivered to said switch means and to said data read out means (29) when said video recorder is in said play mode,
- characterizing data is added to a video signal being recorded during said record mode by said data writing means (28) and said characterizing data is read out from said video signal in said play mode by said data read out means (29), and
- said characterizing data read out from said video signal is sent to a control computer to determine the viewing habits of a test population.

8. A method according to claim 7, characterized in that said characterizing data to be written in the video signal is the television channel number, the television program, the local time, the date, and a check sum.

9. A method according to claim 7, characterized in that said chararacterizing data is written in the first sixteen lines of each frame of said video signal, four bits being written on each one of said sixteen lines.

10. A system for implementing the method according to any one of the claims 7 to 9 with locally arranged telecontrol apparatuses (4a, 4b) for detecting and recording the television channel or the program switched on or the kind of a reproduced video recording and for transmitting memorized data for evaluation to a central computer (6), the telecontrol apparatuses (4a, 4b) being connectable each to at least one video device (1a, 1b, 2) and capable of analyzing the state of an connected video device (1a, 1b, 2), characterized in that each telecontrol apparatus comprises a video module (17), in case of the video device being a video recorder the video module being at least indirectly connected to a video recording and reproducing head (24) of the video recorder, said video module (17) comprising a data writing circuit (28) for writing data in said video signal, a microprocessor (20) for controlling the precise timing relations when writing in said video signal, and a data read out circuit (29) for reproducing said data written in said video signal, said microprocessor (20) memorizing said reproduced data.

11. A system according to claim 10, characterized in that said central computer (6) comprises circuit elements for evaluation of data characterizing the video reproduction and for transmission of interrogations and that each telecontrol apparatus comprises display means for displaying interrogative data and input means for responses to the displayed data.

## Patentansprüche

1. Verfahren zur Gewinnung von Informationen bezüglich der Benützung von Videogeräten durch eine Versuchspopulation, wobei die Videogeräte Video-Aufzeichnungsmittel (2) zur Wiedergabe und Aufnahme von Videoprogrammen beinhalten, mit folgenden Verfahrensschritten:
- Aufzeichnung von Daten, welche das aufgezeichnete Programm kennzeichnen, auf einer Synchronisationsspur eines Video-Aufzeichnungsmediums während der Aufzeichnung des Videoprogramms, einschliesslich Analyse der auf der Synchronisationsspur befindlichen Synchronisationsimpulse und Aufzeichnung der kennzeichnenden Daten zwischen diesen Synchronisationsimpulsen;
- Erfassung der aufgezeichneten kennzeichnenden Daten während der Wiedergabe von Videoprogrammen zur Ermittlung der Kennzeichen dieser Videoprogramme;
- Speichern der erfassten Daten;
- Uebermittlung dieser gespeicherten Daten an einen zentralen Rechner zur Gewinnung von Informationen bezüglich der Benützung von Videogeräten in einer Versuchsumgebung;
dadurch gekennzeichnet, dass die kennzeichnenden Daten mit einem ersten Pegel aufgezeichnet und mit einem zweiten Pegel abgespielt werden, und dass die Pegelunterschiede dieser Signale zur Unterscheidung zwischen dem Aufzeichnungs- und dem Video-Wiedergabebetrieb verwendet werden.

2. Verfahren nach Anspruch 1, dadurch gekennzeichnet, dass beim Fehlen von kennzeichnenden Daten betreffend das aufgezeichnete Programm die Art der Video-Aufzeichnung durch Dialog zwischen dem zentralen Rechner und einem Zuschauer ermittelt wird.

3. Verfahren nach Anspruch 1, dadurch gekennzeichnet, dass die kennzeichnenden Daten mit einem bit pro Bild des Videosignals aufgezeichnet werden, wobei jedes Bild zwei auf der Synchronisationsspur aufgezeichneten Synchronisationsimpulsen entspricht und die Daten zwischen den Synchronisationsimpulsen eingestreut sind.

4. Verfahren nach Anspruch 1, dadurch gekennzeichnet, dass die kennzeichnenden Daten mit niedrigerem Pegel auf die Synchronisationsspur aufgezeichnet werden als die Synchronisationsimpulse.

5. Vorrichtung zur Durchführung des Verfahrens nach einem der Ansprüche 1 bis 4, mit einem Videorecorder, der mittels eines Kontrollkopfs (19) Synchronisationsimpulse auf eine Kontrollspur aufzeichnet, dadurch gekennzeichnet, dass am Kontrollkopf (19) mit einer Zweidraht-Leitung ein bidirektionaler Verstärker (18) angeschlossen ist, der zusätzlich einen Eingang und einen Ausgang aufweist, die jeweils an einem Ausgang bzw. einem Eingang eines Videomoduls (17) angeschlossen sind, welches durch Analyse der Signale am Eingang zwischen Aufzeichnungs- und Wiedergabebetrieb des Videorecorders unterscheiden und im Aufzeichnungsbetrieb am Ausgang kennzeichnende Datensignale erzeugen kann, wobei die kennzeichnenden Datensignale zeitlich mit den Synchronisationsimpulsen gekoppelt sind, so dass sie nur in den Pausen zwischen je zwei Synchronisationsimpulsen erzeugt werden.

6. Vorrichtung zur Durchführung des Verfahrens nach Anspruch 5, dadurch gekennzeichnet, dass die vom Videomodul (17) zum Synchronisationskopf (19) gesendeten kennzeichnenden Datensignale und die vom Synchronisationskopf (19) empfangenen kennzeichnenden Datensignale durch eine Zirkulationsschaltung voneinander entkoppelt sind.

7. Verfahren zur Ermittlung der Fernseh- und Videogewohnheiten einer Versuchspopulation in einer Umgebung enthaltend:
- einen Fernsehempfänger (1a);
- einen Videorecorder (2), der am Fernsehempfänger angeschlossen ist, mit
-- einem Demodulator (22) zur Demodulation der eingehenden Fernsehsignale und
-- einem Videoanschluss;
wobei
- eine am Videorecorder (2) angeschlossene Fernsteuerung (4a) ein Videomodul (17) mit Datenschreib- (28) und Datenlesemitteln (29) aufweist,
- der Videorecorder (2) weiterhin
-- Schaltmittel (26) zum Umschalten zwischen einer Aufzeichnungs- und einer Wiedergabebetriebsart aufweist, wobei diese Schaltmittel einen ersten, wahlweise mit dem Videoeingang verbindbaren Schalter umfassen, der zur Uebermittlung von Videosignalen wahlweise mit einem Eingang des Datenschreibers und Datenlesers verbindbar ist;
und wobei das Verfahren folgende Schritte umfasst:
- die von den Datenschreiber (28) erzeugten Daten werden an einen Aufnahmeverstärker (23) des Videorecorders abgegeben,
- das Ausgangssignal eines Wiedergabeverstärkers (31) des Videorecorders gelangt zum erwähnten Schalter und zum Datenleser (29), wenn der Videorecorder im Wiedergabebetrieb ist,
- kennzeichnende Daten werden dem im Aufnahmebetrieb aufgezeichneten Videosignal durch den Datenschreiber (28) hinzugefügt und werden im Wiedergabebetrieb vom Datenleser (29) aus dem Videosignal ausgelesen, und
- die aus dem Videosignal ausgelesenen kennzeichnenden Signale werden einem Steuerrechner zugeführt, um die Zuschauergewohnheiten einer Versuchspopulation zu ermitteln.

8. Verfahren nach Anspruch 7, dadurch gekennzeichnet, dass die kennzeichnenden Daten, welche in das Videosignal geschrieben werden, die Fernseh-Kanalnummer, das Fernsehprogramm, die Ortszeit, das Datum und eine Prüfsumme sind.

9. Verfahren nach Anspruch 7, dadurch gekennzeichnet, dass die kennzeichnenden Daten in die ersten sechzehn Zeilen jedes frames des Videosignals geschrieben werden, wobei auf jede der sechzehn Zeilen vier bits geschrieben werden.

10. Anlage zur Durchführung des Verfahrens nach einem der Ansprüche 7 bis 9, mit lokal angeordneten Ueberwachungsgeräten (4a, 4b) zur Erfassung und Aufzeichnung des eingeschalteten Fernsehkanals oder -programms oder der Art einer wiedergegebenen Video-Aufzeichnung und zur Uebermittlung gespeicherter Daten zwecks Auswertung an einen zentralen Rechner (6), wobei die Ueberwachungsgeräte (4a, 4b) mit mindestens einem Videogerät (1a, 1b, 2) verbindbar und in der Lage sind, den Betriebszustand eines angeschlossenen Videogeräts (1a, 1b, 2) zu analysieren, dadurch gekennzeichnet, dass jedes Ueberwachungsgerät ein Videomodul (17) aufweist, welches mindestens indirekt mit einem Video-Aufzeichnungs- und Wiedergabekopf (24) des Videorecorders verbunden ist, falls es sich bei dem Videogerät um einen Videorecorder handelt, wobei das Videomodul (17) eine Datenschreibschaltung (28) zum Einschreiben von Daten in das Videosignal, einen Mikroprozessor (20) zur Steuerung der genauen zeitlichen Beziehungen beim Einschreiben des Videosignals und eine Datenleseschaltung (29) zur Reproduktion der in das Videosignal eingeschriebenen Daten aufweist, und wobei der Mikroprozessor (20) die wiedergegebenen Daten speichert.

11. Anlage nach Anspruch 10, dadurch gekennzeichnet, dass der zentrale Rechner (6) Schaltungen zur Auswertung von Daten aufweist, die eine Wiedergabe von Videoprogrammen anzeigen, und zur Uebermittlung von Fragen, und dass jedes Ueberwachungsgerät Anzeigemittel zur Anzeige von Befragungsdaten und Eingabemittel für Antworten auf die angezeigten Daten aufweist.

## Revendications

1. Procédé pour obtenir de l'information par rapport à l'utilisation d'appareillage vidéo par une population de référence, l'appareillage vidéo comprenant un enregistreur vidéo (2) pour la reproduction et l'enregistrement de programmes vidéo, et le procédé comprenant les étapes suivantes:
- enregistrement, pendant l'enregistrement d'un programme vidéo, de données caractérisant le programme enregistré sur une piste de synchronisation d un support d'enregistrement vidéo, en analysant les impulsions de synchronisation comprises sur la piste de synchronisation et en enregistrant les données caractéristiques entre les impulsions de synchronisation;
- détection, pendant la reproduction d'un programme vidéo, des données caractéristiques afin d'identifier les caractéristiques de ce programme vidéo;
- mise en mémoire des données détectées;
- transmission des données mémorisées à un ordinateur central afin d'obtenir de l'information par rapport à l'utilisation d'appareillage vidéo dans un environnement de référence;
caractérisé en ce que les données caractéristiques sont enregistrées à un premier niveau et reproduites à un deuxième niveau, et en ce que les différences de niveau de ces signaux sont utilisées pour distinguer entre les modes d'enregistrement et de reproduction vidéo.

2. Procédé selon la revendication 1, caractérisé en ce qu'en l'absence de données par rapport au programme mémorisé, le type d'enregistrement vidéo est déterminé par un dialogue entre ledit ordinateur central et un spectateur.

3. Procédé selon la revendication 1, caractérisé en ce que les données caractéristiques sont enregistrées à un taux d'un bit par image du signal vidéo, chaque image correspondant à deux impulsions de synchronisation enregistrées sur la piste de synchronisation, et les données étant intercalées entre les impulsions de synchronisation.

4. Procédé selon la revendication 1, caractérisé en ce que les données caractéristiques sont enregistrées sur la piste de synchronisation à un niveau inférieur à celui des impulsions de synchronisation.

5. Appareil pour la mise en oeuvre du procédé selon l'une quelconque des revendications 1 à 4, comprenant un enregistreur vidéo qui enregistre des impulsions de synchronisation sur une piste de contrôle au moyen d'une tête de contrôle (19), caractérisé en ce qu'un amplificateur bidirectionnel est connecté à la tête de contrôle (19) par un câble à deux fils, l'amplificateur bidirectionnel (18) ayant en plus une entrée et une sortie qui sont reliées à une sortie et une entrée d'un module vidéo (17), le module vidéo (17) étant capable de discerner entre les modes d'enregistrement et de reproduction de l'enregistreur vidéo par analyse des signaux a son entrée et de générer des signaux de données caractéristiques à sa sortie pendant le mode d'enregistrement, les signaux caractéristiques étant couplés dans le temps avec les impulsions de synchronisation, de sorte qu'ils ne sont générés que dans les pauses entre deux impulsions successives de synchronisation.

6. Appareil pour la mise en oeuvre du procédé selon la revendication 5, caractérisé en ce que les signaux de données caractéristiques envoyées du module vidéo (17) à la tête de synchronisation (19) et les signaux de données caractéristiques reçus de la tête de synchronisation (19) sont découplés entre eux par un circulateur.

7. Procédé pour déterminer les habitudes de consommation en télévision et vidéo d'une population de référence dans un environnement comprenant:
- un récepteur de télévision (1a);
- un enregistreur vidéo (2) relié à ce récepteur de télévision, cet enregistreur vidéo comprenant
-- un démodulateur (22) pour la démodulation des signaux de télévision reçus;
-- une entrée vidéo;
- un appareil de surveillance (4a) relié à l'enregistreur vidéo (2), comprenant un module vidéo (17) qui comporte des moyens d'écriture (28) et de lecture (29) de données,
l'enregistreur vidéo (2) comprenant en plus
-- des moyens de commutation (26) pour changer entre un mode d'enregistrement et un mode de reproduction, ces moyens de commutation comprenant un premier commutateur pouvant être sélectivement relié à l'entrée vidéo, le premier commutateur pouvant être sélectivement relié à une entrée des moyens d'écriture et de lecture de données afin de transmettre des signaux vidéo à cette dernière;
le procédé comprenant les étapes suivantes:
- les données générées par les moyens d'écriture de données (28) sont fournies à un amplificateur d'enregistrement (23) de l'enregistreur vidéo,
- le signal de sortie d'un amplificateur de reproduction (31) dans l'enregistreur vidéo est fourni auxdits moyens de commutation et aux moyens de lecture de données (29) quand l'enregistreur vidéo est en mode de reproduction,
- des données caractéristiques sont ajoutés à un signal vidéo en cours d'enregistrement pendant le mode d'enregistrement par les moyens d'écriture de données (28), et les données caractéristiques sont extraites du signal vidéo en mode de reproduction par les moyens de lecture de données (29), et
- les données caractéristiques extraites du signal vidéo sont envoyées à un ordinateur de contrôle pour déterminer les habitudes de visionnement d'une population de référence.

8. Procédé selon la revendication 7, caractérisé en ce que les données caractéristiques introduites dans le signal vidéo sont le numéro du canal de télévision, le programme de télévision, le temps local, la date et une somme de vérification.

9. Procédé selon la revendication 7, caractérisé en ce que les données caractéristiques sont écrites dans les seize premières lignes de chaque trame du signal vidéo, quatre bits étant écrits sur chacune des seize lignes.

10. Système pour la mise en oeuvre du procédé selon l'une quelconque des revendications 7 à 9, avec des appareils de surveillance (4a,4b) locaux afin de détecter et enregistrer le canal de télévision ou le programme sélectionné ou le type d'un enregistrement vidéo en cours de reproduction et afin de transmettre des données mémorisées à un ordinateur central aux fins d'évaluation, les appareils de surveillance (4a,4b) pouvant être reliés chacun à au moins un dispositif vidéo (1a, 1b, 2) et étant capables d'analyser l'état de service d'un dispositif vidéo (1a, 1b, 2) relié, caractérisé en ce que chaque appareil de surveillance comporte un module vidéo (17), le module vidéo étant au moins indirectement relié, s'il s'agit d'un enregistreur video, à la tête d'enregistrement et de reproduction (24) de l'enregistreur vidéo, le module vidéo (17) comprenant un circuit d'écriture de données (28) afin d'introduire des données dans le signal vidéo, un microprocesseur (20) afin de commander les relations temporelles précises pendant l'écriture du signal vidéo, et un circuit de lecture de données (29) afin de reproduire les données introduites dans le signal vidéo, ledit microprocesseur (20) mémorisant les données reproduites.

11. Système selon la revendication 10, caractérisé en ce que l'ordinateur central (6) comporte des circuits pour l'évaluation des données caractérisant la reproduction vidéo et pour la transmission de questions, et en ce que chaque appareil de surveillance comporte des moyens d'affichage pour afficher des données d'interrogation et des moyens d'entrée pour des réponses aux données affichées.
